# EUROPÄISCHE PATENTSCHRIFT

(11) **EP 0 587 654 B1**
(45) Veröffentlichungstag und Bekanntmachung des Hinweises auf die Patenterteilung: **09.08.1995**
(21) Anmeldenummer: 92911317.3
(22) Anmeldetag: 19.05.1992
(51) Int. Cl.: C10L 1/02

(54) **TREIBSTOFFGEMISCH, VERFAHREN ZU SEINER HERSTELLUNG UND SEINE VERWENDUNG**
FUEL MIXTURE, METHOD OF PRODUCING IT, AND ITS USE
MELANGE CARBURANT, SON PROCEDE DE PRODUCTION ET SON UTILISATION

(30) Priorität: 23.05.1991 DE 4116905
(43) Veröffentlichungstag der Anmeldung: 23.03.1994
(73) Patentinhaber: ATEC AG, CH-8032 Zürich (CH); BIOL PFLANZENÖL TREIBSTOFFWERKE VERWALTUNGS GmbH, D-01326 Dresden (DE)
(72) Erfinder: SCHUR, Hans, D-7432 Bad Urach (DE); SCHUR, Hans, Peter, D-7430 Metzingen (DE)
(74) Vertreter: Menges, Rolf, Dipl.-Ing.
(86) Internationale Anmeldenummer: EP9201102
(87) Internationale Veröffentlichungsnummer: WO9220761

(56) Entgegenhaltungen:
- DE-A- 2 441 737
- GB-A- 2 055 396
- US-A- 2 010 005
- US-A- 4 405 337

## Beschreibung

Die Erfindung betrifft ein Treibstoffgemisch nach Patentanspruch 1, ein Verfahren zu seiner Herstellung nach Patentanspruch 9, sowie Verwendung dieses Treibstoffgemisches nach Patentanspruch 10.

Die konventionellen flüssigen Treibstoffe für Verbrennungsmotoren bestehen aus Gemischen von Kohlenwasserstoffen und werden größtenteils aus Mineralöl gewonnen. Angesichts der beschränkten Rohölreserven sowie der Preisentwicklung bei Rohölen besteht ein Bedürfnis nach Treibstoffen, in denen die Benzin-Kohlenwasserstoffe zumindest teilweise durch nachwachsende Rohstoffe, wie z.B. fette Öle tierischer oder pflanzlicher Herkunft, ersetzt werden. Durch eine drastische Senkung des Anteils der biologisch nicht abbaubaren Kohlenwasserstoffe wird auch das mit dem möglichen Auslaufen von Treibstoffen verbundene Risiko der Umweltverschmutzung erheblich reduziert.

Wie die GB-PS 136 452 zeigt, wird bereits seit Anfang dieses Jahrhunderts versucht, Kohlenwasserstoffe in Treibstoffen durch Alkohole zu ersetzen, wobei aus pflanzenölen gewonnene freie Fettsäuren als Mischungsvermittler dienen.

In der DE-OS 24 41 737 werden Treibstoffgemische für Verbrennungsmotoren mit Vergaser beschrieben, die aus einem Kohlenwasserstoffgemisch (Normalbenzin oder Superbenzin) und einem Gemisch aus einem Alkohol mit 1 bis 4 C-Atomen und Wasser, sowie gegebenenfallS 0,1 bis 2 Gew.-% eines pflanzlichen Öls, das ebenfalls als Mischungsvermittler dient, bestehen.

Sämtliche Treibstoffgemische der DE-OS 244 17 37 enthalten nur geringe Mengen pflanzlichen Öles und zwischen 50 und 90 Gew.-% Kohlenwasserstoff. Damit kann kein Dieselmotor betrieben werden, es sind insbesondere Leistungseinbußen und Startschwierigkeiten bis hin zu Motorausfällen zu erwarten.

Die GB-A-2 055 396 beschreibt ein Treibstoffgemisch, das Benzin, Alkohol und ein pflanzliches Öl enthält. Dieses Treibstoffgemisch dient als Bezinersatz in Automotoren, kann jedoch wegen des hohen Anteils an etherischem Öl und den damit verbundenen Schwierigkeiten beim Startverhalten von Dieselmotoren nicht als Dieselölersatz in Dieselmotoren verwendet werden.

Die US-A-2 010 005 beschreibt ein Treibstoffgemisch aus Methanol, Benzin und einem geringen Anteil an pflanzlichem fetten Öl, das für Zweitaktmotoren geeignet ist. Wegen des geringen Anteils an fetten Ölen und wegen eines hohen Benzin/Alkohol-Gemischanteils ist auch dieses Treibstoffgemisch nicht für Dieselmotoren geeignet.

Die DE-PS'en 31 49 170 und 31 50 988 beschreiben Dieseltreibstoffe, in denen bis zu 90 % der Kohlenwasserstoffe durch Alkylfettsäureester von pflanzlichen Ölen ersetzt werden und außerdem Alkohole mit bis zu fünf Kohlenstoffatomen enthalten sind. Es ist hier jedoch unbedingt erforderlich, die aus Pflanzen gewonnenen Öle vollständig in Alkylfettsäureester, insbesondere Methylfettsäureester, überzuführen, was einerseits einen hohen Kostenaufwand, andererseits einen großen Anfall an schwer verwertbarem Glycerin-Abfall bedeutet. Das Kohlenwasserstoffgemisch der DE-PS 31 49 170 ist ein klassisches Gasöl, d.h., eine Petroleumfraktion. Die Diesel-Treibstoffgemische der DE-PS 31 50 988 können gegebenenfalls 0,1 bis 5 Gew.-% eines Zündbeschleunigers enthalten.

Die genannten Dieseltreibstoffe, die in landwirtschaftlichen Traktoren eingesetzt werden, weisen Trübungspunkte auf, die nicht unter -15°C liegen, wodurch sie als Treibstoffe im Winter nur sehr bedingt einsetzbar sind.

Es wurden auch bereits versuche unternommen, nicht umgeesterte Pflanzenöle, wie z.B. Rapsöl, als Treibstoffe in Verbrennungsmotoren einzusetzen.

Die US-A-4 405 337 beschreibt ein Treibstoffgemisch für Dieselmotoren, das Alkohol, Dieselkraftstoff und ein planzliches fettes Öl beinhaltet. Das pflanzliche fette Öl wird hier jedoch nur bis zu einem geringen Prozentsatz zugeführt. Bei einem hohen Alkoholgehalt werden Schwierigkeiten im Startverhalten sowie "Nageln" des Motors und Fehlzündungen beobachtet.

Weiter beschreibt die US-A-4 359 324 einen Dieseltreibstoff, der aus 25 bis 75 % eines Butylalkohols und 75 bis 25 % eines pflanzlichen Öls besteht. Die US-A-4 557 734 beschreibt einen Dieseltreibstoff aus einem pflanzlichen Öl, Methanol oder Ethanol und einem geradkettigen Octanol. Die US-A-4 509 953 beschreibt einen Dieseltreibstoff aus 70 bis 90 Vol.-% Gasöl bzw. Schweröl, 10 bis 30 Vol.-% Ethanol und bis zu 30 Vol.-% Leichtbenzin.

Die Verwendung dieser Treibstoffe bedingte jedoch immer umfangreiche Umbaumaßnahmen an den damit betriebenen Motoren. Durch diese Versuche wurde das allgemeine Vorurteil erhärtet, daß es unmöglich ist, Motoren, die für den Betrieb mit mineralischen Kraftstoffen bestimmt sind, ohne Umbaumaßnahmen mit Treibstoffen zu betreiben, die einen hohen Anteil an fetten Ölen enthalten.

Aufgabe der vorliegenden Erfindung ist, ein Treibstoffgemisch zur Verfügung zu stellen, in dem als Hauptkomponente fette Öle als nachwachsende Rohstoffe einsetzbar sind, das einen verbesserten Trübungspunkt aufweist, zu großen Teilen biologisch abbaubar und in allen Typen von Dieselmotoren ohne jegliche Umbaumaßnahmen einsetzbar ist. Es sollte außerdem den mineralischen Dieselkraftstoffen in bezug auf Laufleistung und Vermeidung von Verschleißerscheinungen mindestens äquivalent sein.

Diese Aufgabe wird erfindungsgemäß dadurch gelöst, daß ein Treibstoffgemisch zur Verfügung gestellt wird, das
a) 60 - 88 Vol.-% mindestens eines pflanzlichen und/oder tierischen Öls,
b) 6 bis 20 Vol.-% mindestens eines aliphatischen Alkohols mit 1-5 C-Atomen und
c) 6 bis 20 Vol.% Benzin enthält.

Ferner wird ein Verfahren zur Herstellung dieses Treibstoffgemisches zu Verfügung gestellt, das dadurch gekennzeichnet ist, daß 60 bis 88 Vol.-% mindestens eines pflanzlichen und/oder tierischen Öls, 6 bis 20 Vol.-% mindestens eines aliphatischen Alkohols mit 1 bis 5 C-Atomen und 6 bis 20 Vol.-% Benzin gemischt werden.

Das genannte Treibstoffgemisch wird vorzugsweise als Treibstoff für Dieselmotoren oder als Heizöl verwendet.

Beispiele für die in dem erfindungsgemäßen Treibstoffgemisch als Komponente a) verwendeten pflanzlichen und/oder tierischen Öle sind Rapsöl, Sojaöl, Baumwollöl, Sonnenblumenöl, Rizinusöl, Olivenöl, Erdnußöl, Maisöl, Mandelöl, Palmkernöl, Kokosöl, Senföl und Fischöle. Bevorzugt wird Rapsöl, das ein Gemisch aus teilweise mit Glycerin veresterten Fettsäuren ist, als Komponente a) verwendet, da es in großem Umfang zur Verfügung steht und auf einfache Weise durch Pressen aus Rapssaat gewonnen werden kann. Das verwendete Rapsöl kann sowohl roh gepreßt und entschleimt als auch als Raffinat in das erfindungsgemäße Treibstoffgemisch eingemischt werden. Eine Überführung in Alkylester, wie sie in den DE-PS'en 31 49 170 und 31 50 988 gefordert wird, ist nicht notwendig. Durch den Wegfall dieses Verfahrensschrittes wird es möglich, biologisch weitgehend abbaubare Diesel-Treibstoffe unmittelbar aus der landwirtschaftlichen Produktion auf den Markt zu bringen, ohne daß weitere Energiekosten und Abfallstoffe, wie Glycerin, anfallen. Der Gewichtsanteil der Komponente a) in dem erfindungsgemäßen Treibstoffgemisch liegt bevorzugt zwischen 65 und 85 Vol.-%, insbesondere bevorzugt zwischen 70 und 80 Vol.-%.

Als Komponente b) können in dem erfindungsgemäßen Treibstoffgemisch sowohl geradkettige als auch verzweigte Alkohole mit 1 bis 5 C-Atomen eingesetzt werden. Bevorzugt werden Monoalkohole, wie Methanol, Ethanol, Propanol, Butanol, Pentanol, Isopropanol, Isobutanol, tert.-Butanol, 1-Methylbutanol, 2-Methylbutanol, 3-Methylbutanol, 1,1-Dimethylpropanol und 2,2-Dimethylpropanol verwendet, unter denen Isopropanol besonders bevorzugt ist. Gut einsetzbar ist auch Ethanol, das, wie die eingesetzten Öle, in landwirtschaftlicher Produktion hergestellt werden kann. Der Gewichtsanteil der Komponente b) in dem erfindungsgemäßen Treibstoffgemisch beträgt vorzugsweise 10 bis 15 Vol.-%.

Als Benzin-Komponente c) kann in dem erfindungsgemäßen Treibstoffgemisch jedes beliebige Benzin verwendet werden, beispielsweise Normal- oder Superbenzin; bevorzugt wird jedoch Testbenzin eingesetzt. Testbenzin ist die Bezeichnung für raffinierte Benzine mit einem Kp. von 130-220°C und einem nach Abel-Pensky ermittelten FP. > 21°C (vgl. DIN 51 632, Nov. 1981, Entwurf Feb. 1986). Das erfindungsgemäß verwendete Testbenzin kann beispielsweise eine Oktanzahl von 120 bis 140 aufweisen. Der Gewichtsanteil der Benzin-Komponente c) beträgt vorzugsweise 10 bis 15 Vol.-%.

Ferner können dem erfindungsgemäßen Treibstoffgemisch übliche Additive zugesetzt werden. Für den Betrieb von Dieselmotoren im Winter wird bevorzugt bis zu 1 Vol.-% Diethylether als Anspringhilfe zugesetzt.

Das durch Mischen der Komponenten a), b) und c) hergestellte erfindungsgemäße Treibstoffgemisch kann in allen Dieselmotoren eingesetzt werden, ohne daß eine spezielle Umrüstung auf den neuen Treibstoff erforderlich ist. Das erfindungsgemäße Treibstoffgemisch kann demzufolge beispielsweise zum Betreiben von Dieselmotoren in Personenkraftwagen, Lastkraftwagen, Land- und forstwirtschaftlichen Maschinen, Notstromaggregaten, Pumpen und Schiffen dienen. Diese Motoren können beliebig im Wechsel mit dem erfindungsgemäßen Treibstoffgemisch und herkömmlichen mineralischen Dieseltreibstoffen betrieben werden, wodurch insbesondere für Pkw's und Lkw's eine hohe Mobilität erreicht wird.

In dem erfindungsgemäßen Treibstoffgemisch dienen die als Komponente b) verwendeten Alkohole, insbesondere das Isopropanol, als Antikokungsmittel für Kolbenringe und Ventilsitze. Das als Additiv zugesetzte Benzin dient zur Klärung des Gemisches und führt zu einer verbesserten Zündwilligkeit des Treibstoffgemisches, wobei Testbenzin die besten Werte liefert. Gute Zündwilligkeit des Kraftstoffs bedeutet günstiges startverhalten und ruhigen Lauf des Dieselmotors infolge einer kurzen Aufbereitungszeitspanne bzw. kleinen Zündverzugs; bei großem Zündverzug tritt das bekannte "Nageln" ohrenfällig in Erscheinung.

Führt man für das in Dieselmotoren eingesetzte erfindungsgemäße Treibstoffgemisch Abgastests durch, so liegen die erhaltenen Werte sowohl für Kohlenwasserstoffe und Stickoxide als auch für Kohlenmonoxid weit unter den in der derzeit geltenden Euronorm für Dieselabgase geforderten Werten. Der Schwefeldioxid-Anteil der Abgase wird gegenüber den üblichen Werten von 0,15 % bei herkömmlichen, mineralischen Dieselkraftstoffen verschwindend gering, da die eingesetzten Komponenten praktisch schwefelfrei sind.

Das erfindungsgemäße Treibstoffgemisch ist auch bei tiefen Temperaturen, wie sie im Winter und in hochgelegenen Regionen auftreten, gut einsetzbar, da sein Trübungspunkt Werte bis zu -28°C erreicht und das Gemisch auch bei tieferen Temperaturen nicht ausflockt. Dies führt zu einer wesentlich breiteren Anwendbarkeit gegenüber den bekannten Dieseltreibstoffen auf der Basis pflanzlicher und tierischer Fette.

Die nachstehenden Beispiele und Versuche erläutern die Erfindung.

### Herstellungsbeispiele 1 - 5:

Die erfindungsgemäßen Treibstoffgemische wurden durch einfaches Mischen hergestellt

| 1.) | Vol.-% |
|---|---|
| Rizinusöl | 80 |
| Ethanol | 10 |
| Normalbenzin | 10 |

| 2.) | |
|---|---|
| Rapsöl | 75 |
| Isopropanol | 12,5 |
| Testbenzin | 12,5 |

| 3.) | |
|---|---|
| Sonnenblumenöl | 73 |
| Isopropanol | 13,5 |
| Testbenzin | 13,5 |

| 4.) | |
|---|---|
| Rapsöl | 76 |
| Isopropanol | 11 |
| Testbenzin | 13 |

| 5.) | Vol % |
|---|---|
| Rapsöl | 74 |
| Isopropanol | 12 |
| Testbenzin | 12 |
| Methanol | 2 |

### Versuche im Dieselmotor:

Die erfindungsgemäßen Treibstoffgemische wurden in Dieselmotoren verschiedener Bauart bei Normalbetrieb getestet. Es handelte sich um Serienfahrzeuge, an denen keine Veränderungen baulicherseits durchgeführt wurden. Der Hubraum der getesteten Motoren lag zwischen 1,6 l und 3,0 l. In den Fahrzeugen wurden sämtliche in den Beispielen 1.) bis 5.) genannten Kraftstoffe verwendet.

Diese Versuche führten zu keiner Funktionsstörung. Untersuchungen der Abgaswerte eines Pkw 300 D-Turbo nach Fahrzyklus ECE 15.04 zeigten, daß die Emissionswerte unterhalb der Grenzwerte der Euronorm für Fahrzeuge dieser Bauart liegen.

Tabelle 1 zeigt die für das erfindungsgemäße Treibstoffgemisch gemäß Beispiel 2 ermittelten Abgaswerte (Prüfergebnisse im Fahrzyklus).

**Tabelle 1**

| | Meßwerte [g/Test] für erf.gem. Treibstoffgemisch 2 | Grenzwert [g/Test] (ECE 15.04) | |
|---|---|---|---|
| | | Typisierung | Serie |
| CO | 7,12 | 30,00 | 36,00 |
| HC FID | 1,51 | - | - |
| NOₓ | 3,46 | - | - |
| HC + NOₓ | 4,96 | 8,00 | 10,00 |
| Partikel | 1,266 | 1,10 | 1,30 |

## Patentansprüche

1. Treibstoffgemisch, enthaltend
a) 60 bis 88 Vol.-% mindestens eines pflanzlichen und/oder tierischen fetten Öls,
b) 6 bis 20 Vol-% mindestens eines aliphatischen Alkohols mit 1 bis 5 C-Atomen und
c) 6 bis 20 Vol.-% Benzin.

2. Treibstoffgemisch nach Anspruch 1**, dadurch gekennzeichnet**, daß die Komponente a) aus Rapsöl, Sojaöl, Baumwollöl, Sonnenblumenöl, Rizinusol, Olivenöl, Maisöl, Mandelöl, Palmkernöl, Kokosöl, Senföl oder Erdnußöl gewählt wird.

3. Treibstoffgemisch nach Anspruch 1 oder 2**, dadurch gekennzeichnet**, daß die Komponente a) Rapsöl ist.

4. Treibstoffgemisch nach Anspruch 3, **dadurch gekennzeichnet**, daß das Rapsöl roh gepreßt und entschleimt ist.

5. Treibstoffgemisch nach Anspruch 3, **dadurch gekennzeichnet**, daß das Rapsöl ein Raffinat ist.

6. Treibstoffgemisch nach einem der Ansprüche 1 bis 5, **dadurch gekennzeichnet**, daß die Komponente b) ein geradkettiger oder verzweigter Monoalkohol ist.

7. Treibstoffgemisch nach Anspruch 6, **dadurch gekennzeichnet**, daß die Komponente b) Isopropanol ist.

8. Treibstoffgemisch nach einem der Ansprüche 1 bis 7, **dadurch gekennzeichnet**, daß das Benzin Testbenzin ist.

9. Verfahren zur Herstellung eines Treibstoffgemisches nach einem der Ansprüche 1 bis 8, **dadurch gekennzeichnet**, daß
(a) 60 bis 88 Vol.-% mindestens eines pflanzlichen und/oder tierischen fetten Öls,
(b) 6 bis 20 Vol.-% mindestens eines aliphatischen Alkohols mit 1 bis 5 C-Atomen und
(c) 6 bis 20 Vol.-% Benzin
gemischt werden.

10. Verwendung eines Treibstoffgemisches nach einem der Ansprüche 1 bis 8 als Treibstoff für Dieselmotoren oder als Heizöl.

## Claims

1. A fuel mixture containing
a) 60 to 88% by volume of at least one vegetable and/or animal fatty oil;
b) 6 to 20% by volume of an aliphatic alcohol with 1 to 5 C atoms, and
c) 6 to 20% by volume gasoline.

2. The fuel mixture according to claim 1, characterized in that the component a) is selected from rape oil, soy bean oil, cotton oil, sunflower oil, castor oil, olive oil, corn oil, almond oil, palm kernel oil, coconut oil, mustard oil or peanut oil.

3. The fuel mixture according to claim 1 or 2, characterized in that the component a) is rape oil.

4. The fuel mixture according to claim 3, characterized in that the rape oil is crudely pressed and degummed.

5. The fuel mixture according to claim 3, characterized in that the rape oil is a raffinate.

6. The fuel mixture according to any of claims 1 to 5, characterized in that the component b) is a straight chain or branched monoalcohol.

7. The fuel mixture according to claim 6, characterized in that the component b) is isopropanol.

8. The fuel mixture according to any of claims 1 to 7, characterized in that the gasoline is a test gasoline.

9. A process for production of a fuel mixture according to any of claims 1 to 8, characterized in that
a) 60 to 88% by volume of at least one vegetable and/or animal oil,
b) 6 to 20% by volume of at least one straight chain or branched chain monoalcohol with 1 to 5 C atoms, and
c) 6 to 20% by volume gasoline are mixed.

10. Use of a fuel mixture according to any of claims 1 to 8 as fuel for diesel engines or as heating oil.

## Revendications

1. Mélange carburant comprenant :
a) 60 à 88 % en volume d'au moins une huile végétale et/ou animale,
b) 6 à 20 % en volume d'au moins un alcool aliphatique ayant 1 à 5 atomes de carbone et
c) 6 à 20 % en volume d'essence.

2. Mélange carburant selon la revendication 1, caractérisé en ce que le composant a) est sélectionné dans le groupe contenant l'huile de colza, l'huile de soja, l'huile de coton, l'huile de tournesol, l'huile de ricin, l'huile d'olive, l'huile de mais, l'huile d'amande, l'huile de noyau de palmier, l'huile de noix de coco, l'huile de moutarde ou l'huile de cacahuète.

3. Mélange carburant selon la revendication 1 ou 2, caractérisé en ce que le composant a) est l'huile de colza.

4. Mélange carburant selon la revendication 3, caractérisé en ce que l'huile de colza est pressée et démucilaginée brute.

5. Mélange carburant selon la revendication 3, caractérisé en ce que l'huile de colza est un produit raffiné.

6. Mélange carburant selon l'une quelconque des revendications 1 à 5, caractérisé en ce que le composant b) est un monoalcool à chaîne droite ou divisée.

7. Mélange carburant selon la revendication 6, caractérisé en ce que le composant b) est l'isopropanol.

8. Mélange carburant selon l'une quelconque des revendications 1 à 7, caractérisé en ce que l'essence est de l'essence de test.

9. Procédé de production d'un mélange carburant selon l'une quelconque des revendications 1 à 8, caractérisé en ce que l'on mélange
a) 60 à 88 % en volume d'au moins une huile végétale et/ou animale,
b) 6 à 20 % en volume d'au moins un alcool aliphatique ayant 1 à 5 atomes de carbone et
c) 6 à 20 % en volume d'essence.

10. Utilisation d'un mélange carburant selon l'une quelconque des revendications 1 à 8 en tant que carburant pour des moteurs diesel ou en tant qu'huile de chauffage.
